# EUROPÄISCHE PATENTSCHRIFT

(11) **EP 2 047 755 B1**
(45) Veröffentlichungstag und Bekanntmachung des Hinweises auf die Patenterteilung: **14.12.2011**
(21) Anmeldenummer: 08017521.9
(22) Anmeldetag: 07.10.2008
(51) Int. Cl.: A23F 5/00, A23F 5/04

(54) **Verfahren zum Rösten von Kaffeebohnen**
Method of roasting coffee beans
Procédé destiné à la torréfaction de grains de café

(30) Priorität: 11.10.2007 DE 102007049090
(43) Veröffentlichungstag der Anmeldung: 15.04.2009
(73) Patentinhaber: Carty, Michael, 54352 Thessaloniki (GR)
(72) Erfinder: Krebs, Maria, 40547 Düsseldorf (DE)
(74) Vertreter: Sroka, Peter-Christian

(56) Entgegenhaltungen:
- EP-A- 0 359 515
- DE-B3-102006 003 267
- GB-A- 1 252 643
- GB-A- 2 355 642
- US-A- 1 499 780
- US-A- 3 715 215
- R.EGGERS, A.PIETSCH: "Coffee, recent developments- Technology I: Roasting" 2001, BLACKWELL SCIENCE , OXFORD , XP002511158 * Seite 90 - Seite 91 *

## Beschreibung

Die Erfindung betrifft ein Verfahren zum mehrstufigen Rösten von Kaffeebohnen gemäß dem Oberbegriff des Patentanspruchs 1.

Bei bekannten Verfahren zum Rösten von Kaffee wird die rohe Kaffeebohne in der Regel in einer drehbaren Trommel ca. 15 bis 30 Minuten gerührt, wobei die Atmosphäre, in welcher der Kaffee bewegt wird, bei einer Temperatur im Bereich von ca. 216 ° C gehalten wird. Für eine schonende Behandlung der Kaffeebohnen wird eine möglichst lange Röstzeit angestrebt, vorausgesetzt, dass der Kaffee in dieser Zeit auch gründlich und ausreichend geröstet bzw. gebrannt wird. Zu hohe Temperaturen sind in der Regel zu vermeiden, da dann die Gefahr besteht, dass der Kaffee beim Rösten anbrennt, während bei einer Verkürzung der Röstzeit ohne entsprechende Erhöhung der Rösttemperatur keine ausreichende Kaffeeröstung erzielt wird. An die Röstung schließt sich eine Abkühlung der heißen Kaffeebohnen mit Luft und/oder Wasser an.

Bei einem, in der US 1,499,780 beschriebenen Kaffeebohnen-Röstverfahren gemäß dem Oberbegriff des Anspruchs 1 erfolgt in einem Röstgerät eine erste Röststufe. Danach werden die Kaffeebohnen in einem gesonderten Kühlbehälter zu einer dünnen Schicht ausgebreitet, auf die kaltes Wasser in kleinen Strahlen aufgesprüht wird, was zu einer sehr abrupten und schnellen Abkühlung der Kaffeebohnen führt und damit zu einem Qualitätsverlust des Kaffees führen kann. Es schließt sich eine zweite Röststufe wieder in dem Röstgerät an, aus dem die abschließend gerösteten Kaffeebohnen in einen Luftkühler überführt und mit einer kalten Luftströmung abgekühlt werden.

Bei einem in der US 3,715,215 beschriebenen Kaffeebohnen-Röstverfahren werden die Kaffeebohnen in einem Röstgerät, z.B. einer Rösttrommel, auf Temperaturen zwischen 132 °C und 260 °C erwärmt, wobei durch einmalige oder mehrmalige intermittierende Zugabe von Wasser in das Röstgerät unerwünschte Stoffe aus den Kaffeebohnen entfernt werden sollen. Diesem bekannten Röstverfahren liegt der Kerngedanke zugrunde, die Kaffeebohnen in Gegenwart von ausreichender Feuchtigkeit in ein und demselben Röstgerät zu rösten, d.h. durch Zugabe von Wasser während des Röstprozesses. Dadurch wird auch die Aufgabe gelöst, auf zusätzliche Geräte in Form von Temperier- oder Trocknerbehältern verzichten zu können. Es handelt sich um einen sogenannten Digerierprozess (englisch: digestion) bei dem die Einwirkung einer Flüssigkeit, z.B. Wasser, auf einen Körper durch Wärmezufuhr unterstützt wird. Nach Beendigung des Röstprozesses werden die Bohnen mit Luft oder einem Luft/Wasser-Gemisch abgekühlt.

Bei einem in der DE 10 2006 003 267 B3 beschriebenen Kaffeeröstverfahren wird die Temperatur der in eine vertikal ausgerichtete Röstkammer eingeblasenen Luft in mehreren Stufen von etwa 200 °C, im Extremfall bis auf 280 °C erhöht. Danach wird die Temperatur der in die Röstkammer eingeblasenen Luft um 20 °C unterhalb der erreichten Kaffeebohnentemperatur abgesenkt, um diese zuerst langsam vorzukühlen. Danach erfolgt die abschließende Kühlung der Kaffeebohnen nach Überführung der Kaffeebohnen aus dem Röster in einen Kühlbehälter durch Zufuhr von Frischluft.

Gemäß EP 359 515 werden Kaffeebohnen in einer Rösttrommel durchgeröstet und fallen danach in eine Kühltrommel, in der die Kaffeebohnen durch Aufsprühen von Wasser mittels einer Sprühdüse abgekühlt werden.

Der Erfindung liegt die Aufgabe zugrunde, ein die Kaffeebohnen schonendes mehrstufiges Röstverfahren zu schaffen, wobei es insbesondere darum geht, einen Kaffee mit einem niedrigen Koffeingehalt und geringen Gerb- und Bitterstoffanteilen zu erhalten.

Zur Lösung dieser Aufgabe wird ein mehrstufiges Kaffeebohnen-Röstverfahren gemäβ patent anspruch 1 vorgeschlagen.

Ein Kerngedanke der Erfindung besteht somit darin, dass die Kaffeebohnen am Ende der beiden ersten Röststufen behutsam mit einer Luftnebeldusche (Wasserdampf) gekühlt und nicht abgeschreckt werden.

Gemäß einer bevorzugten Ausführungsform der Erfindung erfolgen die Röstprozesse der drei Stufen innerhalb einer rotierenden, vorzugsweise gasbeheizten Rösttrommel, wobei die Bohnen zwecks Abkühlung während der ersten und zweiten Stufe aus der Rösttrommel entnommen und einem Kühlgerät zugeführt werden. Die Bohnen werden zwecks Abkühlung während der ersten und zweiten Stufen in eine kreisende Bewegung gesetzt, wobei die Abkühlung in den Stufen 1 und 2 mittels eines mechanischen Feinzerstäubers erfolgt, der luftnebelartig die im Kühlgerät befindlichen Bohnen benetzt, ohne diese signifikant zu benässen.

In der dritten Stufe wird gekühlte und klimatisierte Trockenluft mit einer Temperatur im Bereich von etwa 12 °C etwa 8 bis 10 Minuten lang, vorzugsweise 10 Minuten lang, auf die Bohnen zur Einwirkung gebracht.

## Patentansprüche

1. Verfahren zum Rösten von Kaffeebohnen, wobei man die Rohbohnen
• in der ersten Stufe zum Entziehen der Restfeuchte 4 bis 6 Minuten lang, vorzugsweise 5 Minuten lang, bei einer Temperatur von 205 °C röstet und anschließend mit einer Luftnebeldusche (Wasserdampf) bei 10 °C bis 15 °C, vorzugsweise 12 °C, während eines Zeitraums von 4 bis 7 Minuten, vorzugsweise 5 Minuten, abkühlt, und die derart vorbehandelten Bohnen
• in einer zweiten Stufe bei einer Temperatur von 205 °C weiterröstest und wiederum wie in Stufe eins beschrieben abkühlt, und anschließend
• in einer dritten Stufe 8 bis 20 Minuten lang, vorzugsweise 9 bis 14 Minuten lang, bei einer Temperatur zwischen 200 °C bis 235 °C, vorzugsweise 210 °C bis 230 °C, nochmals röstet und anschließend
• 8 bis 12 Minuten lang, vorzugsweise 10 Minuten lang, gekühlte und klimatisierte Trockenluft mit einer Temperatur von 12 °C auf die Bohnen zur Einwirkung bringt.

2. Verfahren nach Anspruch 1, **dadurch gekennzeichnet, dass** die Röstprozesse der drei Stufen innerhalb einer rotierenden Rösttrommel erfolgt.

3. Verfahren nach Anspruch 1 oder 2, **dadurch gekennzeichnet, dass** die Kaffeebohnen während der ersten und zweiten Stufen zwecks Abkühlung in eine kreisende Bewegung versetzt werden.

4. Verfahren nach einem der Ansprüche 1 bis 3, **dadurch gekennzeichnet, dass** die Abkühlung in den Stufen 1 und 2 mittels eines mechanischen Feinzerstäubers erfolgt, der die Bohnen luftnebelartig benetzt, ohne diese signifikant zu benässen.

## Claims

1. Process for the roasting of coffee beans, during which the raw beans
• are roasted in a first phase at a temperature of 205°C for a period of 4 to 6 minutes, preferably 5 minutes so as to remove residual moisture and then cooled in an air mist (water vapour) at a temperature of 10°C to 15°C, preferably 12°C, for a period of 4 to 7 minutes, preferably 5 minutes, after which the beans pre-treated in this manner
• are roasted further in a second phase at a temperature of 205°C and then cooled again as described for the first phase, after which
• the beans are roasted once more in a third phase for 8 to 20 minutes, preferably 9 to 14 minutes, at a temperature between 200°C and 235°C, preferably 210°C to 230°C, following which
• cooled and conditioned dry air with a temperature of 12°C is caused to act on the beans for 8 to 12 minutes, preferably 10 minutes.

2. Process in accordance with Claim 1, **characterised in that** the roasting processes in the three phases are always performed within a revolving roasting drum.

3. Process in accordance with Claim 1 or Claim 2, **characterised in that** the coffee beans are put into circulatory motion during the first and second phases, for cooling.

4. Process in accordance with one of Claims 1 to 3, **characterised in that** cooling during phases 1 and 2 is effected by means of a mechanical nebuliser that causes the beans in the cooler to be subjected to an air mist like action without being significantly wetted.

## Revendications

1. Un procédé de torréfaction de grains de café, durant lequel
• Lors de la première opération, on procède à une torréfaction, pour éliminer l'humidité résiduelle, pendant 4 à 6 minutes (de préférence pendant 5 minutes), à la température de 205°C puis on effectue un refroidissement en projetant un jet d'air ambiant en forme de brouillard (vapeur d'eau) jusqu'à une valeur comprise entre 10 et 15°C (de préférence 12°C), pendant une durée comprise entre 4 et 7 minutes (de préférence 5 minutes) puis, en utilisant les grains de café traités comme indiqué ci-dessous,
• Lors d'une deuxième opération, on procède à une nouvelle torréfaction à une température de 205°C puis on réalise un nouveau refroidissement, comme celui qui est décrit pour la première opération puis
• Lors d'une troisième opération, on procède pendant 8 à 20 minutes (de préférence pendant 9 à 14 minutes) à une nouvelle torréfaction à une température comprise entre 200 et 235°C (de préférence entre 210 et 230°C) puis
• Pendant 8 à 12 minutes (de préférence pendant 10 minutes) on procède à un refroidissement puis on envoie de l'air sec et climatisé à une température de 12°C sur les grains de café.

2. Un procédé comme celui qui est décrit dans l'affirmation 1, si ce n'est que les trois opérations de torréfaction décrites ci-dessus s'effectuent dans un cylindre rotatif de torréfaction.

3. Un procédé comme celui qui est décrit dans l'affirmation 1 ou 2, si ce n'est que les grains de cafés, pendant le refroidissement qui a lieu entre la première opération et la deuxième opération, sont soumis à un mouvement circulaire.

4. Un procédé comme celui qui est décrit dans l'une ou l'autre des affirmations 1 à 3, si ce n'est que le refroidissement qui a lieu lors des opérations 1 et 2 s'effectue à l'aide d'un fin brouillard obtenu par le biais d'un dispositif mécanique et durant lequel les grains de cafés reçoivent un jet d'air en forme de brouillard, sans provoquer une humidification sensible de ces grains.
